# EUROPÄISCHE PATENTSCHRIFT

(11) **EP 1 554 485 B1**
(45) Veröffentlichungstag und Bekanntmachung des Hinweises auf die Patenterteilung: **07.01.2009**
(21) Anmeldenummer: 03775172.4
(22) Anmeldetag: 08.10.2003
(51) Int. Cl.: F02M 25/08, F02M 37/00

(54) **KRAFTSTOFFVERSORGUNGSANLAGE FüR EINE BRENNKRAFTMASCHINE**
FUEL SUPPLYING INSTALLATION FOR AN INTERNAL COMBUSTION ENGINE
INSTALLATION D'ALIMENTATION EN CARBURANT D'UN MOTEUR A COMBUSTION INTERNE

(30) Priorität: 26.10.2002 DE 10249954
(43) Veröffentlichungstag der Anmeldung: 20.07.2005
(73) Patentinhaber: Daimler AG, 70327 Stuttgart (DE); ROBERT BOSCH GMBH, 70469 Stuttgart (DE)
(72) Erfinder: GLENZ, Andreas, 71394 kernen i.R. (DE); HOLDER, Eberhard, 73734 Esslingen (DE); HOENIG, Guenter, 71254 Ditzingen (DE); MATT, Martin, 76646 Bruchsal-Untergrombach (DE); POSSELT, Andreas, 75417 Mühlacker (DE)
(86) Internationale Anmeldenummer: PCT/EP2003/011105
(87) Internationale Veröffentlichungsnummer: WO 2004/038209

(56) Entgegenhaltungen:
- EP-A- 1 002 946
- DE-A- 10 154 455
- US-A- 6 035 837
- US-B1- 6 467 470

## Beschreibung

Die Erfindung betrifft eine Kraftstoffversorgungsanlage für eine Brennkraftmaschine gemäß den im Oberbegriff des Anspruchs 1 angegebenen Merkmalen.

Eine derartige Kraftstoffversorgungsanlage ist aus DE 197 34 493 C1 bekannt. Diese Kraftstoffversorgungsanlage ist mit einem Kraftstofftank für flüssigen Kraftstoff, von dem aus eine Kraftstoffzuleitung zu einer Einspritzvorrichtung führt, mit einer Verdampfungs- und Kondensierungseinrichtung für niedrig siedende Kraftstoffanteile, die mit dem Kraftstofftank verbunden ist, mit einem der Verdampfungs- und Kondensierungseinrichtung nachgeschalteten Zwischentank für das Kondensat, von dem aus eine Kondensatleitung zu einem die Zufuhr zu der Einspritzeinrichtung regelnden Steuerventil führt, und mit einer die in der Verdampfungs- und Kondensierungseinrichtung anfallenden höher siedenden Restkraftstoffanteile abführenden Restkraftstoffrückleitung versehen. Die Restkraftstoffrückleitung mündet in einen Zusatztank, von dem aus eine Restkraftstoffzuleitung zu einem in der Kraftstoffzuleitung angeordneten Umschaltventil führt. Die Steuerung des Ventils ist derart, daß der Restkraftstoff aus der Restkraftstoffzuleitung in die zu der Einspritzeinrichtung führende Kraftstoffzuleitung wenigstens teilweise bei Vollast der Brennkraftmaschine zugeführt wird.

Aus der WO 94/24432 ist ein Verfahren zur Kontrolle der Abgasemissionen einer Verbrennungsmaschine bekannt, welches die Extraktion einer niedrig siedenden Kraftstofffraktion aus Normalbenzin oder anderen Kraftstoffen aus flüssigen Kohlenwasserstoffen einschließt, wobei diese niedrig siedende Kraftstofffraktion während einer Kaltstartprozedur dem Verbrennungsmotor zur Reduktion der oxidierbaren Verunreinigungen im Abgas des Verbrennungsmotors zugeführt werden soll. Dies soll solange geschehen, bis der katalytische Konverter, der zur Verminderung der Verunreinigungen im Abgas des Motors eingesetzt wird, seine Arbeitstemperatur erreicht hat. Danach wird die Kraftstoffzufuhr zum Motor auf Normalbenzin oder andere Kraftstoffe aus flüssigen Kohlenwasserstoffen umgestellt.

Aufgrund der heute weltweit geforderten Einhaltung der gesetzlich festgeschriebenen Abgasemissionsgrenzwerte werden an Bord eines mit Verbrennungsmotoren betriebenen Kraftfahrzeugs eine Kraftstoffversorgungsanlage mit einer Kraftstoff-fraktionierungseinrichtung zur Herstellung von niedrig siedenden Kraftstoffanteilen benötigt, um die während des Betriebs des Kraftfahrzeuges entstehenden Schadstoffemissionen in der Kaltstart- und/oder Warmlaufphase zu reduzieren und den Schadstoffausstoß insgesamt zu vermindern. Bisher bekannte Lösungen führen beim Kaltstart niedrig siedende Kraftstoffanteile allein oder dem normalen Kraftstoff zugemischt dem Verbrennungsmotor zur Minderung des Schadstoffaustoßes zu, wobei überschüssiger Startkraftstoff häufig in den nachfolgenden Betriebsphasen des Fahrzeugs verbraucht wird. Dies führt zu einem erhöhten Startkraftstoffverbrauch.

Aufgabe der Erfindung ist es daher, eine Kraftstoffversorgungsanlage für eine Brennkraftmaschine zur Verfügung zu stellen, die zum einen eine Verbrauchsoptimierung im Hinblick auf den Startkraftstoff, zum anderen während der verschiedenen Betriebsphasen des Kraftfahrzeugs trotzdem eine reduzierte Schadstoffemission aufweist.

Diese Aufgabe wird mit der Vorrichtung nach Anspruch 1 gelöst. Vorteilhafte Ausführungen der Erfindung sind Gegenstand der Unteransprüche und der Beschreibung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung löst obengenannte Aufgabe, indem mittels einer Kraftstoffpumpe zwei verschiedene Kraftstoffkreisläufe betrieben werden, wobei überschüssiger Kraftstoff getrennt nach Haupt- und Startkraftstoff über Rücklaufleitungen in die jeweiligen Speicherbehälter rückführbar ist. Die erfindungsgemäße Kraftstoffversorgungsanlage für eine Brennkraftmaschine weist zwei getrennte Speicherbehälter für flüssigen Kraftstoff, ein erstes steuerbares Ventil mit zwei Eingängen, die über Kraftstoffleitungen mit jeweils einem der Speicherbehälter verbunden sind, und einen Ausgang, der über eine Kraftstoffpumpe mit dem Eingang eines zweiten steuerbaren Ventils verbunden ist, auf, wobei das zweite steuerbare Ventil zwei Ausgänge hat. Gemäß der Erfindung werden die beiden Ausgänge des zweiten steuerbaren Ventils über zwei getrennte Kraftstoffleitungen der Brennkraftmaschine zugeführt. Beide Kraftstoffleitungen enthalten zwischen dem zweiten Ventil und der Brennkraftmaschine jeweils einen Kraftstoffdruckregler, wobei ausgehend von den Kraftstoffdruckreglern jeweils eine Rücklaufleitung zu jeweils einem der Speicherbehälter vorgesehen ist.
Somit ist überschüssiger Kraftstoff, in äußerst vorteilhafter Weise getrennt in Hauptkraftstoff und Startkraftstoff, über separate Rücklaufleitungen in die jeweiligen Speicherbehälter rückführbar. Als ein weiterer Vorteil läßt sich auf diese Weise ein einmal gewonnener Startkraftstoff sparen, um ihn beispielsweise in Kaltstartsituationen zur Reduzierung der Abgasemissionen in kürzester Zeit zur Verfügung zu haben. Durch die deutliche Verminderung der Schadstoffemission, insbesondere bei der Emission von Kohlenwasserstoffen, resultiert daraus günstigerweise zum einen eine Reduzierung des Edelmetallgehalts bei den Abgaskatalysatoren, zum anderen ein Wegfall der motornahen Katalysatoren, die aufgrund der hohen Temperaturen in diesem Bereich einer starken Alterung unterworfen wären.
Gemäß einer bevorzugten Ausführungsform werden die beiden vom zweiten Ventil ausgehenden Kraftstoffleitungen zu unterschiedlichen Einlaßöffnungen des Einspritzventils der Brennkraftmaschine zugeführt.
Eine sehr vorteilhafte Weiterbildung der Erfindung besteht außerdem darin, daß die Kraftstoffversorgungsanlage mit einer Kontrolleinheit zur Steuerung der beiden steuerbaren Ventile versehen ist, die derart ausgelegt ist, daß Kraftstoff aus jeweils nur einem der Speicherbehälter einer bestimmten Einlaßöffnung des Einspritzventils der Brennkraftmaschine zugeführt wird.
Erfindungsgemäß ist ferner einer der Speicherbehälter für flüssigen Kraftstoff als Fahrzeugtank für Hauptkraftstoff, der andere für Startkraftstoff ausgelegt.

Die erfindungsgemäße Vorrichtung eignet sich aufgrund der genannten Vorteile für den Einsatz in allen mobilen Systemen, wie Personen- und Nutzfahrzeuge.

Die Erfindung wird nun anhand der beigefügten Zeichnung weiter beschrieben. In dieser zeigt in schematischer Darstellung als ein Beispiel:
- Fig. 1: eine bevorzugte Ausführungsform des Gesamtsystems einer Kraftstoffversorgungsanlage
- Fig. 2: den Betrieb einer Kraftstoffversorgungsanlage mit Hauptkraftstoff nach Abschluß des Warmlaufs bzw. beim Warmstart des Kraftfahrzeugs
- Fig. 3: eine Spülung der Kraftstoffpumpe mit Startkraftstoff vor dem Start des Verbrennungsmotors
- Fig. 4: den Betrieb einer Kraftstoffversorgungsanlage mit Startkraftstoff beim Kaltstart und Warmlauf des Kraftfahrzeugs
- Fig. 5: eine Erstbefüllung mit Startkraftstoff
- Fig. 6: den Betrieb der Gasförderpumpe

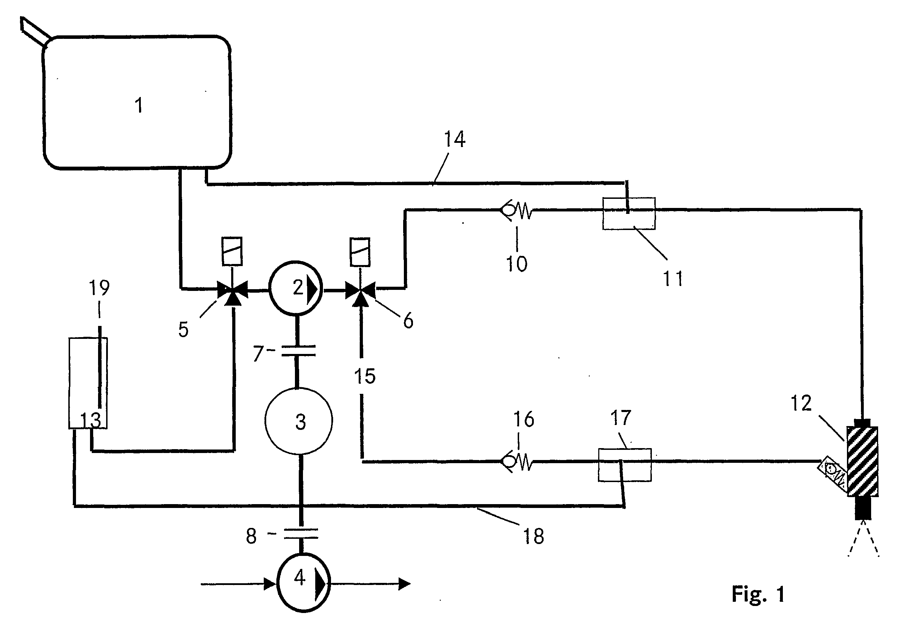

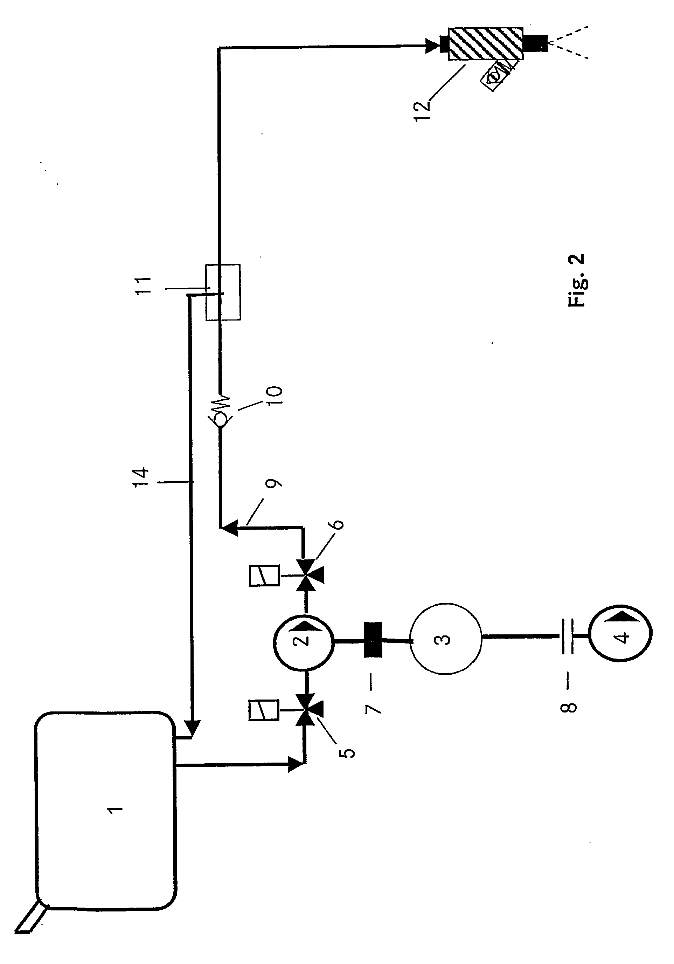

Fig. 1 umfaßt als Gesamtsystem einer Kraftstoffversorgungsanlage die in den Fig. 2 bis 6 dargestellten Betriebsarten oder Funktionen der Anlage: Betrieb mit Hauptkraftstoff, Spülung mit Startkraftstoff, Betrieb mit Startkraftstoff, Erstbefüllung mit Startkraftstoff und den Betrieb der Gasförderpumpe, welche nachstehend erläutert werden. Das Gesamtsystem erlaubt vorteilhafterweise zum einen die Herstellung von Startkraftstoff und zum anderen gleichzeitig das Managen der Förderung von Hauptkraftstoff und Startkraftstoff.
Fig. 1 zeigt eine Pumpeneinheit bestehend aus einer Kraftstoffpumpe 2, einem Elektromotor 3 und einer Gasförderpumpe 4. Zwischen Kraftstoffpumpe 2 und dem Elektromotor 3 ist eine Kupplung 7 bzw. zwischen Elektromotor 3 und Gasförderpumpe 4 eine Kupplung 8 vorgesehen. Die zwischen einem Ventil 5 und 6 angeordnete Kraftstoffpumpe 2 saugt bei entsprechender Ventilstellung 5 Hauptkraftstoff aus dem Hauptkraftstofftank 1 an. Über ein Ventil 6 gelangt der Hauptkraftstoff in die Hauptkraftstoffleitung 9 zum einem Einspritzventil 12. Zwischen Ventil 6 und dem Einspritzventil 12 befindet sich in der Hauptkraftstoffleitung 9 ein Kraftstoffdruckregler 11, wobei ausgehend von dem Kraftstoffdruckregler 11 eine Rücklaufleitung 14 zum Hauptkraftstofftank 1 vorgesehen ist. Zwischen Ventil 6 und dem Kraftstoffdruckregler 11 befindet sich in der Hauptkraftstoffleitung 9 noch ein zusätzliches Ventil 10.

Das Ventil 5 ist nun so eingestellt, daß die durch den Elektromotor 3 angetriebene Kraftstoffpumpe 2 Startkraftstoff aus einem Startkraftstofftank 13 ansaugt, welcher entweder über das Ventil 6 in die Hauptkraftstoffleitung 9 oder in die Startkraftstoffleitung 15 eingebracht werden kann. Zwischen Ventil 6 und dem Einspritzventil 12 befindet sich in der Startkraftstoffleitung 15 ein Kraftstoffdruckregler 17, wobei ausgehend von dem Kraftstoffdruckregler 17 eine Rücklaufleitung 18 zum Startkraftstofftank 13 vorgesehen ist. Zwischen Ventil 6 und dem Kraftstoffdruckregler 17 befindet sich ebenfalls ein zusätzliches Ventil 16.

Wie in Fig. 2 beispielhaft dargestellt, zeigt die Prinzipzeichnung den Betrieb einer Kraftstoffversorgungsanlage mit Hauptkraftstoff nach Abschluß des Warmlaufs bzw. beim Warmstart des Kraftfahrzeugs. Hierzu treibt der Elektromotor 3 über die geschlossene Kupplung 7 die Kraftstoffpumpe 2 an, wobei die Kupplung 8 offen ist. Ventil 5, insbesondere ein 3-Wege-Ventil, bevorzugt ein elektrisch betriebenes Magnetventil, ist so eingestellt, daß die Kraftstoffpumpe 2 Hauptkraftstoff aus dem Hauptkraftstoff-Fahrzeugtank 1 ansaugt. Über ein Ventil 6, insbesondere ein 3-Wege-Ventil, bevorzugt ein elektrisch betriebenes Magnetventil, gelangt der Hauptkraftstoff in die Hauptkraftstoffleitung 9 zum Einspritzventil 12, das die Einspritzung in den nicht näher dargestellten Verbrennungsmotor steuert. Statt eines Einspritzventils mit seitlichem Rückschlagventil kann auch ein lanzenförmiger Kraftstoffverteiler mit in die Lanze integriertem Rückschlagventil vorgesehen sein. Ein Kraftstoffdruckregler 11 reguliert den Einspritzdruck in den Verbrennungsmotor. Zwischen Ventil 6 und dem Kraftstoffdruckregler 11 befindet sich in der Hauptkraftstoffleitung ein zusätzliches Ventil 10, bevorzugt ein Rückschlagventil.

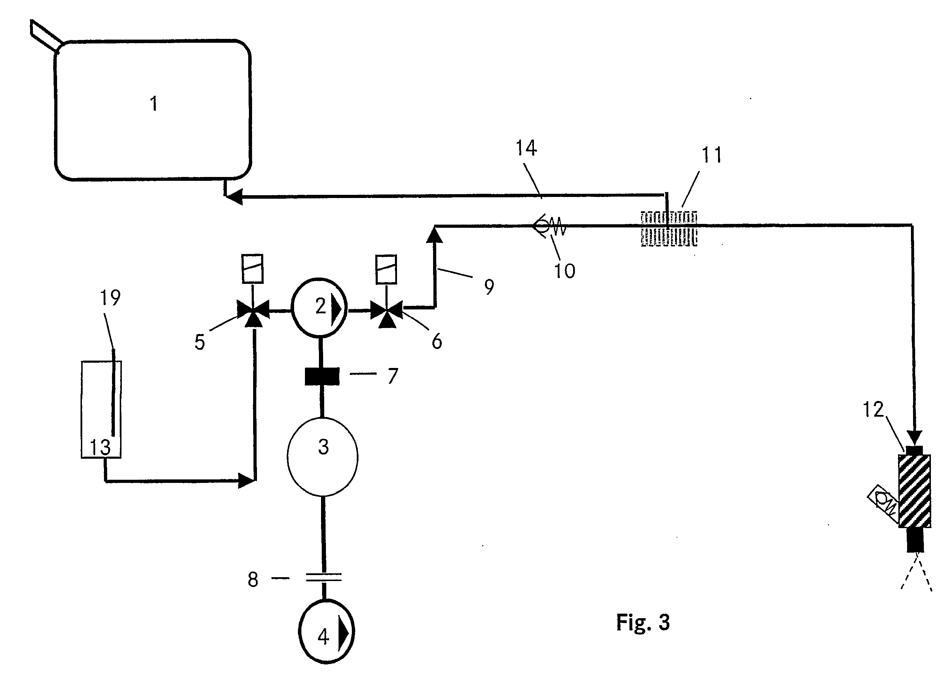

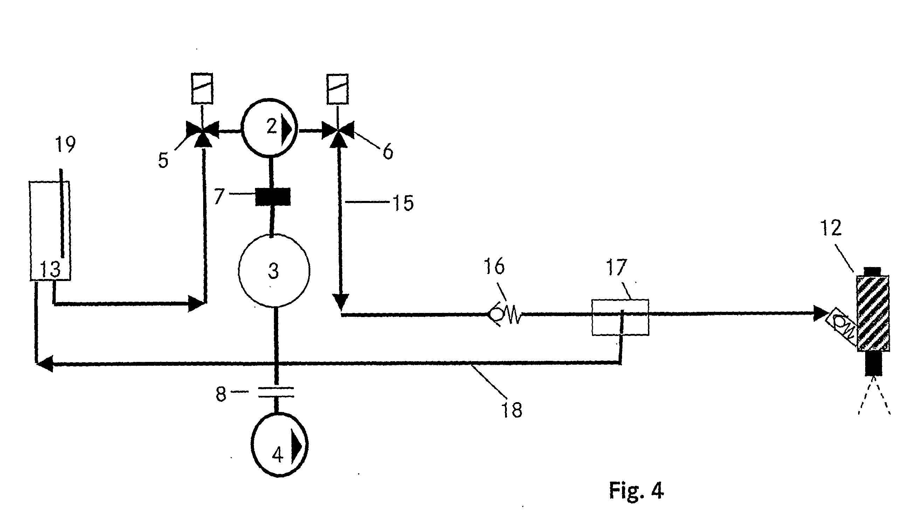

Fig. 3 beschreibt schematisch eine Spülung der Kraftstoffpumpe 2 mit Startkraftstoff vor dem Starten des noch kalten Verbrennungsmotors. In der Kraftstoffpumpe 2 befindet sich ein Totvolumen, das mit Hauptkraftstoff aus dem letzten Abstellvorgang des Fahrzeugs gefüllt ist. Um jedoch den Verbrennungsmotor gleich zu Beginn des Starts mit reinem Startkraftstoff versorgen zu können, ist eine Spülung mit Startkraftstoff erforderlich. Hierzu treibt der Elektromotor 3 über die geschlossene Kupplung 7 die Kraftstoffpumpe 2 an. Kupplung 8 ist bei diesem Vorgang offen. Das Ventil 5 ist so eingestellt, daß die Kraftstoffpumpe 2 Startkraftstoff aus dem Startkraftstofftank 13 ansaugt und über ein Ventil 6 in die Hauptkraftstoffleitung 9 fördert. Der Startkraftstoff gelangt über einen Kraftstoffdruckregler 11 und eine Kraftstoffrücklaufleitung 14 in den Hauptkraftstofftank 1. Das Einspritzventil 12 für den Verbrennungsmotor bleibt bei diesem Vorgang noch geschlossen. Nach kurzer Zeit wird Ventil 6 derart umgeschaltet, daß der Startkraftstoff in die Startkraftstoffleitung 15, dargestellt in Fig. 4, gelangt. Zwischen Ventil 6 und einem Kraftstoffdruckregler 17 befindet sich in der Startkraftstoffleitung 15 noch ein zusätzliches Ventil 16, bevorzugt ein Rückschlagventil. Der kalte Verbrennungsmotor kann jetzt gestartet werden. Beim Kaltstart und Warmlauf des Motors erfolgt der Betrieb mit Startkraftstoff. Nachdem die Spülung mit Startkraftstoff entsprechend Fig. 3 erfolgt ist, wird das Ventil 6, wie in Fig. 4 gezeigt, so eingestellt, daß der überschüssige Startkraftstoff über den Kraftstoffdruckregler 17 und eine Startkraftstoffrücklaufleitung 18 zurück in den Startkraftstofftank 13 gelangt. Dies spart in äußerst vorteilhafterweise Startkraftstoff. Nach Abschluß des Warmlaufs wird in den Betrieb mit Hauptkraftstoff umgeschaltet, wie dies in Fig. 2 beschrieben ist.

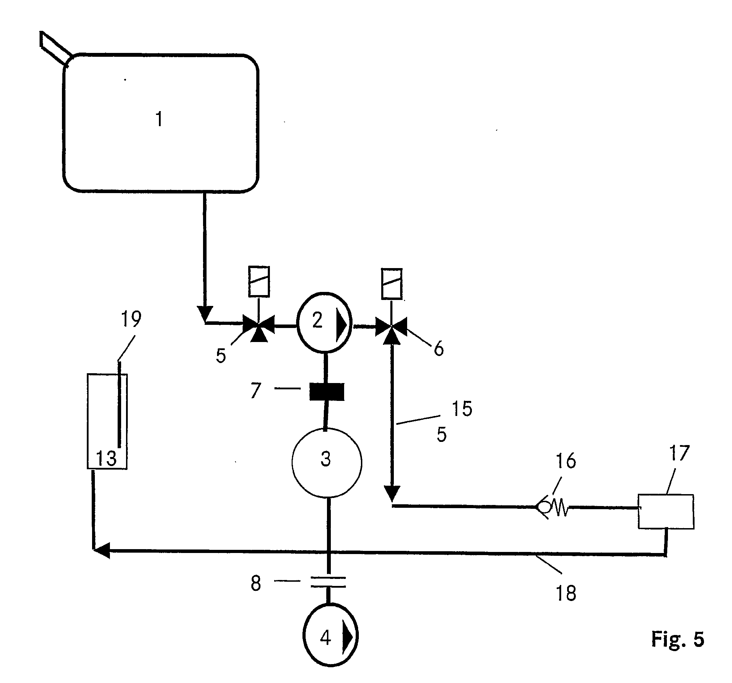

Die Erstbefüllung mit Startkraftstoff erfolgt, wie in Fig. 5 gezeigt, bei Erstbetriebnahme oder nach einer Reparatur, da sich in dieser Situation noch kein Startkraftstoff im Startkraftstofftank 13 und in der Starkraftstoffleitung 15 befindet. Damit trotzdem bereits der erste Start mit Startkraftstoff erfolgen und die Startkraftstoffleitung 15 gefüllt werden kann, wird eine kleine Menge Startkraftstoff in den Hauptkraftstofftank 1 eingefüllt. Der Elektromotor 3 treibt über die geschlossene Kupplung 7 die Kraftstoffpumpe 2 an. Die Kupplung 8 ist hierbei geöffnet. Ventil 5 ist dabei so eingestellt, daß die Kraftstoffpumpe 2 Startkraftstoff aus dem Hauptkraftstofftank 1 ansaugt. Über das Ventil 6 gelangt der Startkraftstoff in die Startkraftstoffleitung 15 zum Einspritzventil 12 des Verbrennungsmotors. Der Verbrennungsmotor kann jetzt gestartet werden. Über den Kraftstoffregler 17 und der Startkraftstoffrückleitung 18 gelangt der überschüssige Startkraftstoff zurück in den Startkraftstofftank 13 und füllt diesen auf. Wird während des Warmlaufs vom. Füllstandsmesser 19 im Startkraftstofftank der obere Grenzwert angezeigt, so wird das Ventil 5 in der Weise umgeschaltet, daß die Kraftstoffpumpe 2 jetzt Startkraftstoff aus dem Startkraftstofftank ansaugt, wie in Fig. 4 gezeigt, bis der Warmlauf abgeschlossen ist. Danach kann der Hauptkraftstofftank 1 mit Hauptkraftstoff gefüllt werden.

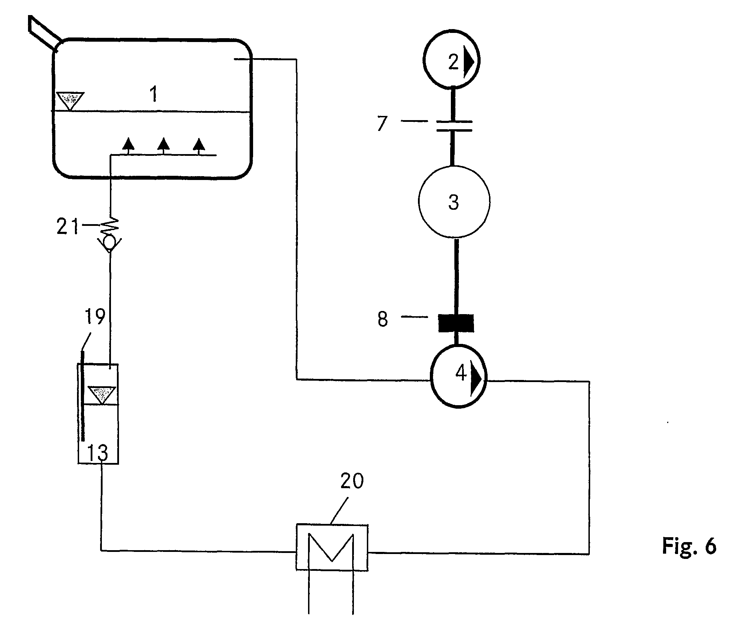

Nach Abschluß des Warmlaufs muß durch den Betrieb der Gasförderpumpe 4 der Kraftstofffraktionierungseinheit der verbrauchte Startkraftstoff wieder ergänzt werden. Dies ist in Fig. 6 schematisch dargestellt. Dabei wird während des Betriebs mit Hauptkraftstoff die Kupplung 8 geschlossen, so daß auch die Gasförderpumpe 4 angetrieben wird. Diese saugt Luft und Kraftstoffdampf aus dem Hauptkraftstofftank 1 ab und komprimiert das Gemisch. In einem nachfolgenden Wärmetauscher 20 kühlt das Gemisch ab, so daß die Kraftstoffanteile kondensieren. Die verbliebene Luft fördert das Kraftstoffkondensat in den Startkraftstofftank 13, wird nach dem Druckentlastungsventil 21 auf Umgebungsdruck entspannt und gelangt über ein Verteilerrohr wieder in den Hauptkraftstofftank 1. Beim Aufsteigen der Luftblasen reichern sich diese mit der niedriger siedenden Kraftstoffkomponente an. Der Kreislauf beginnt erneut. Zeigt der Füllstandsmesser 19 während der Fraktionierung den oberen Grenzwert an, wird durch Öffnen der Kupplung 8 die Fraktionierung beendet. Sollte vor Erreichen des oberen Grenzwerts zwischenzeitlich der Verbrennungsmotor abgestellt werden, bedeutet dies ein gleichzeitiges Abstellen der Kraftstoffpumpe 2. Damit die Fraktionierung trotzdem bis zum Erreichen der oberen Füllstandsmarke fortführbar ist, kann die Kupplung 7 geöffnet werden und zu Ende fraktioniert werden.

Bisher bekannte Lösungen beschreiben einen Kraftstoffkreislauf eines Fahrzeugs mit einem zusätzlichen Startkraftstoffkreislauf zur Emissionsverminderung insbesondere in der Kaltstartphase. Dabei erfolgt die Förderung des Hauptkraftstoffs getrennt von der Förderung des Startkraftstoffs. Dies impliziert zwei getrennte Antriebe für die jeweiligen Pumpen der beiden getrennten Systeme. Solche Anlagen sind häufig apparativ relativ komplex und aufwendig konzipiert und benötigen daher ein großes Bauvolumen mit einem entsprechendem Baugewicht. Entsprechend ergeben sich durch das Zusammenfassen der Kraftstoffversorgungseinheit, enthaltend eine Pumpeneinheit und einen Startkraftstofftank - welche in den Hauptkraftstofftank einer Brennkraftmaschine integriert sind- zu einer Baueinheit, vorteilhafterweise zum einen eine Reduktion des Volumens einer solchen Kraftstoffversorgungseinheit wie auch ein wesentlich geringerer Bauaufwand, zum anderen entfällt durch die Verwendung des Elektromotors als Antrieb für beide Pumpensysteme - Kraftstoffpumpe und Gasförderpumpe- ein zusätzlicher Antrieb, wie es im Falle eines getrennten Betriebes beider Systeme notwendig gewesen wäre. Der Wegfall des zusätzlichen Antriebs führt daher zu einer Kostenreduktion bei der Herstellung des Bauteils. Ferner läßt sich im Falle einer Wartung der Kraftstoffversorgungseinheit diese ohne großen Aufwand aus dem Kraftstoffbehälter ausbauen. Durch die Kapselung der Pumpeneinheit ergibt sich weiterhin eine gedämpfte Geräuschentwicklung. Außerdem läßt sich die so gestaltete Kraftstoffversorgungseinheit problemlos in jeden Kraftstoffbehälter integrieren, ohne daß der jeweilige Kraftstoffbehälter daran angepaßt werden muß. Dies verkürzt die Enzwicklungszeiten erheblich und erspart die Kosten der Anpassung an den jeweiligen Kraftstoffbehälter eines Fahrzeugs. Durch entsprechendes Schalten der Ventile 5 und 6 erlaubt die Kraftstoffversorgungsanlage außerdem bei Erstinbetriebnahme eines Fahrzeugs mittels einer Pumpe (der Kraftstoffpumpe 2) die sofortige Befüllung des Hauptkraftstofftanks mit Startkraftstoff. Dies trägt an dieser Stelle wiederum vorteilhafterweise zur Emissionsverminderung bei.

Die Arbeitsweise der Kraftstofffraktionierungseinheit beruht auf dem Gedanken der Schleppgasfraktionierung und ist in der Patentschrift DE 199 27 177 C1 ausführlich beschrieben.

## Patentansprüche

1. Kraftstoffversorgungsanlage für eine Brennkraftmaschine mit zwei getrennten Speicherbehältern für flüssigen Kraftstoff, einem ersten steuerbaren Ventil mit zwei Eingängen, die über Kraftstoffleitungen mit jeweils einem der Speicherbehälter verbunden sind, einem Ausgang, der über eine Kraftstoffpumpe mit dem Eingang eines zweiten steuerbaren Ventils verbunden ist, wobei das zweite steuerbare Ventil zwei Ausgänge hat,
**dadurch gekennzeichnet,**
**dass** die beiden Ausgänge des zweiten steuerbaren Ventils über zwei getrennte Kraftstoffleitungen der Brennkraftmaschine zugeführt werden und beide Kraftstoffleitungen zwischen dem zweiten Ventil und der Brennkraftmaschine jeweils einen Kraftstoffdruckregler enthalten, wobei ausgehend von den Kraftstoffdruckreglern jeweils eine Rücklaufleitung zu jeweils einem der Speicherbehälter vorgesehen ist.

2. Kraftstoffversorgungsanlage nach Anspruch 1, wobei die beiden vom zweiten Ventil ausgehenden Kraftstoffleitungen zu unterschiedlichen Einlaßöffnungen des Einspritzventils der Brennkraftmaschine zugeführt werden.

3. Kraftstoffversorgungsanlage nach Anspruch 2, mit einer Kontrolleinheit zur Steuerung der beiden steuerbaren Ventile, die derart ausgelegt ist, daß Kraftstoff aus jeweils nur einem der Speicherbehälter einer bestimmten Einlaßöffnung des Einspritzventils der Brennkraftmaschine zugeführt wird.

4. Kraftstoffversorgungsanlage nach Anspruch 1,
**dadurch gekennzeichnet,**
**dass** der eine Speicherbehälter für flüssigen Kraftstoff als Fahrzeugtank für Hauptkraftstoff ausgelegt ist.

5. Kraftstoffversorgungsanlage nach Anspruch 1,
**dadurch gekennzeichnet,**
**dass** der andere Speicherbehälter für flüssigen Kraftstoff als Fahrzeugtank für Startkraftstoff ausgelegt ist.

## Claims

1. Fuel supply installation for an internal combustion engine, with two separate reservoir containers for liquid fuel, a first controllable valve with two inlets connected by respective fuel lines to one of the reservoirs in each case, and one outlet connected via a fuel pump to the inlet of a second controllable valve, the second controllable valve having two outlets,
**characterised in that**
the two outlets of the second controllable valve are connected via two separate fuel lines to the internal combustion engine and the two fuel lines between the second valve and the internal combustion engine contain in each case a fuel pressure regulator, such that starting from the fuel pressure regulator in each case a return line is provided leading to one of the respective reservoir containers.

2. Fuel supply installation according to Claim 1, in which the two fuel lines coming from the second valve lead to different respective inlet openings of the injection valve of the internal combustion engine.

3. Fuel supply installation according to Claim 2, with a control unit for controlling the two controllable valves, which is designed in such manner that in each case fuel from only one or the reservoirs is delivered to a given inlet opening of the injection valve of the internal combustion engine.

4. Fuel supply installation according to Claim 1,
**characterised in that**
one of the liquid fuel reservoirs is designed as the vehicle's tank for the main fuel.

5. Fuel supply installation according to Claim 1,
**characterised in that**
the other liquid fuel reservoir is designed as the vehicle's tank for a starting fuel.

## Revendications

1. Installation d'alimentation en carburant pour un moteur à combustion interne, comprenant deux réservoirs séparés pour un carburant liquide, une première vanne commandée comportant deux entrées, lesquelles sont reliées via des conduites de carburant respectivement à l'un des réservoirs, une sortie, laquelle est reliée via une pompe à carburant à l'entrée d'une seconde vanne commandée, ladite seconde vanne commandée possédant deux sorties,
**caractérisée en ce que**
les deux sorties des deux vannes commandées sont amenées via deux conduites de carburant séparées au moteur à combustion interne et les deux conduites de carburant entre la seconde vanne et le moteur à combustion interne contiennent chacune un régulateur de pression de carburant et il est prévu un conduit de retour respectif partant des régulateurs de pression de carburant vers l'un des réservoirs respectifs.

2. Installation d'alimentation en carburant selon la revendication 1, dans laquelle les deux conduites de carburant partant de la seconde vanne sont amenées à des ouvertures d'entrée différentes de la soupape d'injection du moteur à combustion interne.

3. Installation d'alimentation en carburant selon la revendication 2, comprenant une unité de commande pour la commande des deux vannes commandées, ladite unité étant conçue de telle manière que le carburant provenant d'un seul des réservoirs est amené respectivement à une ouverture d'entrée déterminée de la soupape d'injection du moteur à combustion interne.

4. Installation d'alimentation en carburant selon la revendication 1, **caractérisée en ce qu'**un réservoir pour carburant liquide est conçu à titre de réservoir d'un véhicule pour le carburant principal.

5. Installation d'alimentation en carburant selon la revendication 1, **caractérisée en ce que** l'autre réservoir pour carburant liquide est conçu à titre de réservoir d'un véhicule pour un carburant de démarrage.
